# DEMANDE DE BREVET EUROPEEN

(11) **EP 4 443 000 A1**
(43) Date de publication de la demande: **09.10.2024**
(21) Numéro de dépôt: 24168325.9
(22) Date de dépôt: 03.04.2024
(51) Int. Cl.: F04B 15/08, F04B 19/00, F04B 53/10, G01N 3/12, G01N 3/18

(54) **INSTALLATION DE CYCLAGE D'UN RÉSERVOIR D'HYDROGÈNE**

(30) Priorité: 03.04.2023 FR 2303304; 03.04.2023 FR 2303302; 03.04.2023 FR 2303303
(71) Demandeur: COMMISSARIAT À L'ÉNERGIE ATOMIQUE ET AUX ÉNERGIES ALTERNATIVES, 75015 Paris (FR)
(72) Inventeur: CARRIERE, Stéphane, 37260 MONTS (FR); VILLALONGA, Stéphane, 37260 MONTS (FR)
(74) Mandataire: Ernest Gutmann - Yves Plasseraud S.A.S.

(57) **Abrégé**

Installation (8) de test en cyclage d'un réservoir d'hydrogène comprenant :
- un premier circuit (10) basse pression de circulation d'un premier fluide ayant une première viscosité et dans lequel est agencé une centrale hydraulique (CH) de génération de pression,
- un deuxième circuit (12) haute pression de circulation d'un deuxième fluide ayant une seconde viscosité inférieure à la viscosité du premier fluide,
- un troisième circuit (14) haute pression de circulation d'un troisième fluide présentant un point de fusion inférieur à celui du premier fluide et de préférence d'au maximum -40°C,
- au moins un multiplicateur (M1, M2) agencé à la jonction du premier circuit (10) et du deuxième circuit (12).

## Description

### Domaine technique

Le contenu de la demande concerne les installations et dispositifs de cyclage d'un réservoir d'hydrogène.

### Technique antérieure

Un banc de cyclage hydraulique d'un réservoir de stockage d'hydrogène gazeux est destiné comme son nom l'indique à réaliser un cyclage en pression d'un réservoir d'hydrogène afin de contrôler ses capacités de tenue mécanique. Ce type d'installation doit permettre un test en cyclage d'un réservoir dans des conditions de températures variant de -40°C à +85 °C.

A l'heure actuelle, plusieurs installations existent et comprennent généralement un circuit de fluide comportant au moins un multiplicateur permettant d'augmenter la pression en fluide dans le circuit à destination des réservoirs. Ces installations fonctionnent généralement avec un premier fluide d'huile provenant d'une centrale hydraulique et alimentant en basse pression le multiplicateur et un second fluide de travail consistant généralement en de l'eau glycolée circulant dans la partie haute pression du circuit. Le choix de l'eau glycolée résulte de la possibilité de faire des tests en cyclage à toutes les températures et plus spécifiquement à des températures négatives.

Ce type d'installation présente plusieurs difficultés. En premier lieu, l'eau glycolée conduit à des pertes de charges importantes dans le circuit résultant donc d'une plus grande difficulté à maitriser les variations de pression nécessaire au cyclage. Ainsi, lorsque l'on souhaite tester un réservoir à température ambiante ou à basse température, le circuit haute pression en eau glycolée est indifféremment utilisée.

Par ailleurs, le cyclage d'un réservoir avec de l'eau glycolée conduit à un échauffement important du fluide ce qui implique l'ajout d'échangeur de chaleur additionnels pour abaisser la température afin que les cas de cyclage à température ambiante soient réalisés avec une bonne température de consigne.

On note également que la manutention d'un multiplicateur de la technique antérieure est délicate puisque le montage/démontage est délicat. En effet, en utilisation, un multiplicateur est agencé en position verticale pour un gain évident de place et pour assurer une usure uniforme des pièces d'étanchéité en fonctionnement. Toutefois, la maintenance doit être réalisée en position horizontale ce qui s'avère compliqué puisqu'il convient de disposer d'une installation permettant un basculement du multiplicateur entre la position horizontale et la position verticale, ce type d'installation étant généralement encombrante. Par ailleurs, l'étanchéité entre les parties basse pression et haute pression doit être contrôlée et subir des opérations de maintenance qui s'avèrent également compliquées.

Le cyclage froid s'avère très consommateur d'énergie la même installation de cyclage est utilisée à la fois pour les cyclages à température ambiant et les cyclages à basse température de sorte qu'il est nécessaire de refroidir tout le circuit d'eau glycolée qui s'étend depuis le ou les multiplicateurs jusqu'au réservoir testé en cyclage.

On note également que le remplissage des réservoirs d'hydrogène, des multiplicateurs se fait manuellement et du circuit de liaison fluidique au réservoir est réalisé manuellement ce qui est fastidieux et ne permet pas non plus de s'assurer que le circuit est bien dépourvu de bulle d'air pouvant gêner le test en cyclage du réservoir. La présence d'air dans le circuit peut perturber les essais et le bon fonctionnement de l'installation. De plus, les poches d'air perturbent les instruments de contrôle.

### Résumé

Le présent document concerne une installation de test en cyclage d'un réservoir d'hydrogène comprenant :
- un premier circuit basse pression de circulation d'un premier fluide ayant une première viscosité et dans lequel est agencé une centrale hydraulique (CH) de génération de pression,
- un deuxième circuit haute pression de circulation d'un deuxième fluide ayant une seconde viscosité inférieure à la viscosité du premier fluide,
- un troisième circuit haute pression de circulation d'un troisième fluide présentant un point de fusion inférieur à celui du premier fluide et de préférence d'au maximum - 40°C,
- au moins un multiplicateur agencé à la jonction du premier circuit et du deuxième circuit.

La réalisation d'une installation avec trois circuits distincts permet de garantir les performances de cyclage. En particulier, le premier fluide permet une mise en pression rapide et l'utilisation du second circuit permet de limiter les pertes de charge. Le troisième circuit assure des cyclages à températures extrêmes. Avec cette configuration, il est possible de tester les réservoirs d'hydrogène dans toutes les conditions thermiques et de pression souhaitées correspondant aux cas d'usage ou de criticité auxquels le réservoir doit répondre.

Le premier circuit et le deuxième circuit peuvent être agencés en tout ou partie dans une première enceinte à température ambiante.

Le troisième circuit peut être agencé dans une enceinte comportant des moyens de refroidissement et de contrôle de la température jusqu'à une basse température d'au moins -40°C.

Le premier fluide peut être une huile ayant au moins un grade 46.

Le deuxième fluide peut être de l'eau à une température comprise entre 15 et 25, de préférence aux environ de 20°C.

Le troisième fluide peut être de l'eau glycolée.

Le troisième circuit peut être logé dans une enceinte et l'installation peut comprendre des moyens de refroidissement et de pilotage de la température dans l'enceinte et de la température du troisième fluide.

Ledit au moins un multiplicateur peut être installé en position verticale.

Dans un mode de réalisation préféré, l'installation comprendra au moins deux multiplicateurs.

Ledit au moins un multiplicateur peut comprendre une première partie de corps cylindrique agencée en partie basse et remplie du premier fluide et une seconde partie de corps cylindrique agencée en partie haute et remplie du second fluide, la première partie de corps cylindrique et la seconde partie de corps cylindrique étant séparées à étanchéité l'une de l'autre par une cartouche amovible portée solidaire du piston.

La seconde partie de corps cylindrique peut comprendre un obturateur amovible obturant une extrémité libre de la seconde partie du corps cylindrique, cet obturateur comprenant deux canaux dont un premier canal est relié un dispositif de gavage en deuxième fluide et dont un second canal est relié au second circuit.

Au moins un, de préférence au moins deux échangeurs de chaleur est agencé en sortie dudit au moins un multiplicateur.

Le présent document concerne également donc un vérin hydraulique, en particulier pour une installation de mise en pression d'un réservoir d'hydrogène, comprenant un corps cylindrique d'axe longitudinal comportant une première partie de corps cylindrique basse pression et une seconde partie de corps cylindrique haute pression, un piston étant monté dans la première partie du corps cylindrique et étant monté à une première extrémité d'une tige de piston s'étendant à coulissement dans la seconde partie du corps cylindrique, dans lequel une seconde extrémité de la tige opposée à la première extrémité porte une cartouche amovible apte à coulisser à étanchéité dans ladite seconde partie de corps cylindrique, la seconde partie du corps cylindrique étant obturée par un organe d'obturation amovible agencée en vis-à-vis longitudinal de la cartouche amovible.

Les opérations de maintenance du piston sont facilitées puisqu'il est possible d'accéder au volume interne de la seconde partie de corps cylindrique par l'intermédiaire de l'organe d'obturation qui est amovible. La maintenance du vérin peut ainsi être réalisé en position verticale.

Selon une autre caractéristique, l'organe d'obturation comprend un rebord annulaire engagé en appui selon un premier sens de l'axe longitudinal sur un rebord annulaire correspondant de la seconde partie du corps cylindrique.

L'organe d'obturation peut comprendre une première partie cylindrique et une seconde partie cylindrique séparées l'une de l'autre par le rebord annulaire de l'organe d'obturation.

La première partie peut comprendre un filetage vissé sur un filetage correspondant de la seconde partie du corps cylindrique.

Un premier joint annulaire, de préférence torique, par exemple en téflon ^{®}, peut être agencé entre le filetage et le rebord annulaire de l'organe d'obturation.

Un second joint annulaire peut être serré entre le rebord annulaire de l'organe d'obturation et la seconde partie du corps cylindrique, ce second joint étant par exemple en thermoplastique.

L'organe d'obturation peut être bloqué en translation, selon un second sens de la direction longitudinale, par une culasse annulaire vissée sur un filetage d'une surface interne de la seconde partie du corps cylindrique.

Dans cette configuration, la culasse annulaire peut ainsi serrer le rebord annulaire de l'organe d'obturation sur le rebord annulaire du corps cylindrique.

La culasse annulaire peut comprendre des moyens de fixation d'un organe de serrage/desserrage de la culasse.

La cartouche amovible peut comprendre un joint annulaire d'étanchéité bloqué longitudinalement par des bagues annulaires de serrage.

La cartouche peut comprendre un épaulement annulaire contre lequel est appliquée une première des bagues. Le joint annulaire est ensuite engagé de manière à venir en contact de la première bague. La seconde bague peut être fixée par exemple par vissage sur une portion cylindrique de la seconde
La cartouche peut être bloquée par un dispositif à goupille sur une extension longitudinale de la tige insérée dans la cartouche.

La première partie du corps cylindrique peut comprendre une première chambre et une deuxième chambre séparées l'une de l'autre par le piston, la première chambre et la deuxième chambre étant destinées à être alimentées avec un premier fluide.

L'organe obturation peut comprendre un orifice de passage d'un fluide sous pression logé dans la seconde partie de corps cylindrique.

La formation d'un orifice de passage d'un liquide au niveau du corps cylindrique conduirait à la formation d'une fragilité sur le corps. Au contraire, l'utilisation d'un organe d'obturation rend le corps cylindrique plus difficilement fabricable et moins soumis aux fragilités mécaniques. Par ailleurs, l'écoulement s'effectuant par l'organe d'obturation amovible permet de limiter les pertes de pertes de charge en comparaison de la technique antérieure. Enfin, l'organe d'obturation peut être aisément remplacé, ce qui s'avère simple et peu coûteux.

La première partie du corps cylindrique peut être reliée à un premier circuit d'un premier fluide basse pression et la seconde partie du corps cylindrique est reliée à un second circuit d'un second fluide haute pression. L'organe d'obturation peut comprendre au moins un canal s'étendant longitudinalement et reliant fluidiquement l'intérieur, c'est-à-dire au volume intérieure, de la seconde partie de corps cylindrique au second circuit.

A la différence de la technique antérieure, l'orifice de sortie haute pression du multiplicateur est formé selon l'axe du piston ce qui limite les pertes de charge par rapport à un orifice formé dans la paroi de la seconde partie de corps cylindrique. Par ailleurs, cet orifice est déporté sur une pièce amovible, ce qui permet son remplacement simple et rapide en maintenance et à faible coût.

Le présent document concerne aussi une installation de test en cyclage à basse température d'un réservoir d'hydrogène comprenant :
- Un circuit primaire de circulation d'un fluide primaire ayant un point de fusion voisin de 0°C,
- Un circuit secondaire de circulation d'un fluide secondaire ayant un point de fusion d'au maximum -40°C,
- Au moins un séparateur de fluide permettant de transmettre la pression du fluide primaire au fluide secondaire,
- Une enceinte logeant intégralement le circuit secondaire ainsi que le séparateur,
- Des moyens de refroidissement et de pilotage de la température dans l'enceinte et du fluide secondaire.

Selon une autre caractéristique, l'installation peut comprendre au moins deux séparateurs.

Selon une autre caractéristique, l'installation peut être telle qu'une partie du circuit primaire est logée dans l'enceinte et comprend des moyens d'isolation thermique du circuit primaire, ces moyens d'isolation thermique comprenant par exemple des moyens de chauffage.

Selon encore une autre caractéristique, les moyens de refroidissement et de pilotage de la température peuvent comprendre un échangeur de chaleur entourant une portion du circuit secondaire destinée à être relié à un réservoir à tester.

L'échangeur de chaleur peut comprendre un serpentin agencé autour de ladite portion du circuit secondaire.

L'échangeur de chaleur peut être relié à un cryostat.

Lorsque l'installation de test en cyclage à basse température est intégrée à une installation de test en cyclage comportant trois circuits comme décrit précédemment, alors le circuit primaire comprenant le fluide primaire peut s'entendre comme étant le second circuit comprenant le second fluide, le circuit secondaire comprenant le fluide secondaire peut s'entendre comme étant le troisième circuit comprenant le troisième fluide, le premier circuit correspondant au circuit basse pression de circulation du premier fluide.

### Brève description des dessins

D'autres caractéristiques, détails et avantages apparaîtront à la lecture de la description détaillée ci-après, et à l'analyse des dessins annexés, sur lesquels :
[Fig. 1] illustre une installation de cyclage à température ambiante et en froid selon le présent document ;
[Fig. 2] illustre schématiquement l'installation de la figure 1 ;
[Fig. 3] illustre l'unité de pressurisation de l'installation de cyclage de la figure 1, cette unité comprenant au moins un multiplicateur, et dans l'exemple représenté elle en comprend deux ;
[Fig. 4] illustre l'unité de pressurisation reliée au premier circuit, au second circuit ainsi qu'à un circuit de gavage alimenté en second fluide ;
[Fig. 5] illustre une unité de cyclage à températures extrêmes de l'installation de la figure 1 ;
[Fig. 6] illustre un multiplicateur selon le présent document ;
[Fig. 7] illustre une vue en coupe d'un obturateur selon d'une extrémité de la seconde partie de corps cylindrique du multiplicateur de la figure 6 ;
[Fig. 8] illustre une vue en perspective de l'obturateur ;
[Fig. 9] comprend trois parties A, B et C respectivement nommées figure 9A, 9B et 9C dans la description détaillée ci-après lesquelles illustrent les étapes successives de démontage de l'obturateur représenté aux figures 7 et 8 ;
[Fig. 10] comprend trois parties A, B et C respectivement nommées figure 10A, figure 10B et figure 10C dans la description détaillée ci-après, la figure 10A illustrant un multiplicateur selon le présent document et en position verticale, une cartouche d'étanchéité étant visible à une extrémité supérieure du multiplicateur et en position de démontage pour maintenance, les figures 10B et 10C étant des vues à plus grande échelle de la zone délimitée en pointillés sur la figure 10A et selon deux orientations différentes autour d'un axe longitudinal du multiplicateur ;
[Fig. 11] illustre une vue schématique en perspective du démontage de la cartouche d'étanchéité de la figure 10 ;
[Fig. 12] comprend trois parties A, B et C respectivement nommées figure 12A, 12B et 12C dans la description détaillée ci-après lesquelles illustrent les étapes successives de démontage des pièces constitutives de la cartouche.

### Description détaillée

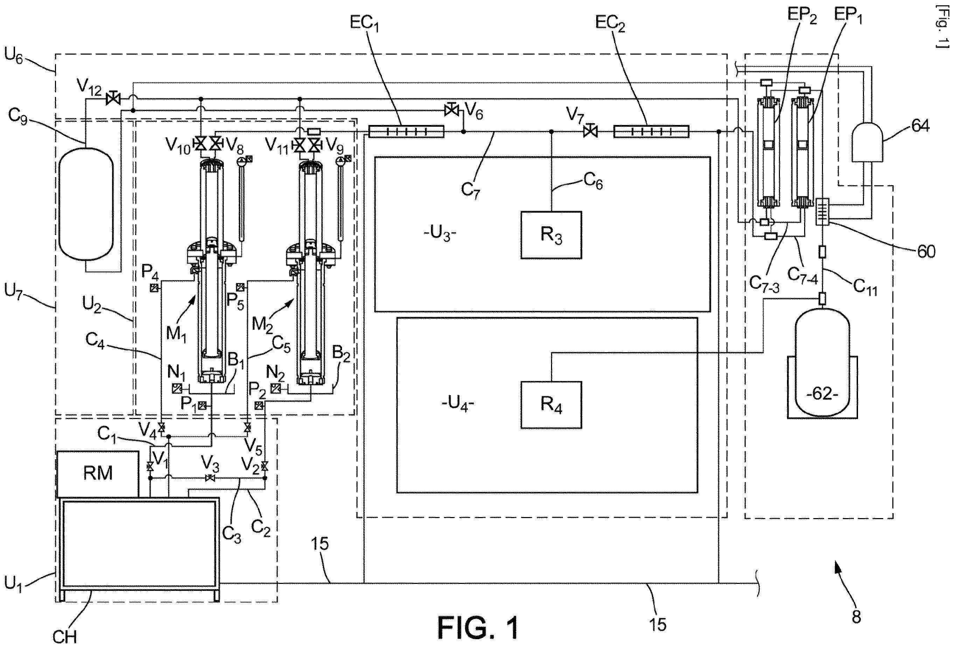

On se réfère en premier lieu à la figure 1 qui représente une installation 8 de test en cyclage d'un réservoir d'hydrogène comprenant :
- un premier circuit 10 basse pression de circulation d'un premier fluide ayant une première viscosité, de préférence, le premier circuit comprend un fluide permettant de protéger les composants de la corrosion. Il facilite également l'étanchéité des équipements, grâce à sa viscosité adaptée, et favorise un bon rendement hydraulique. De préférence, le premier fluide sera une huile d'un type particulier comme décrit ci-après,
- un deuxième circuit 12 haute pression de circulation d'un deuxième fluide ayant une seconde viscosité inférieure à la viscosité du premier fluide, le deuxième circuit 12 et le premier circuit 10 peuvent être agencés dans une même enceinte à température ambiante,
- un troisième circuit 14 haute pression de circulation d'un troisième fluide présentant un point de fusion inférieur à celui du premier fluide et de préférence d'au maximum -40°C,
- au moins un multiplicateur M1, M2 agencé à la jonction du premier circuit et du deuxième circuit.

Au moins un séparateur EP1, EP2 est agencé à la jonction entre le deuxième circuit et le troisième circuit. Ainsi configuré, le premier circuit est indépendant fluidiquement du deuxième circuit lequel est lui-même indépendant du troisième circuit. Comme cela apparaitra à la lumière de la description qui suit, le premier circuit fournit une pression de travail qui est communiquée au deuxième circuit, ce deuxième circuit communiquant la pression au troisième circuit.

Le terme « multiplicateur » s'entend comme un organe multipliant la pression entre un entrée et la sortie. Dans le présent document, le multiplicateur permet d'augmenter la pression dans le deuxième circuit, c'est-à-dire multiplier la pression, par rapport à la pression du premier circuit.

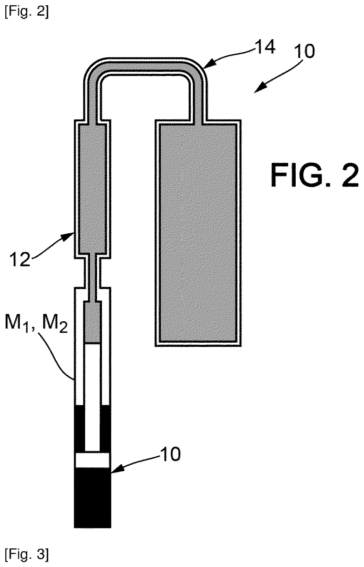

Le principe de coopération des trois circuits fluidiques est illustré en figure 2. La combinaison de trois circuits de fluide qui sont ici liquides, permet de bien gérer la thermique de l'installation. En particulier, l'ajout d'un deuxième circuit 12 dont le fluide présente une viscosité inférieure à celle du premier fluide et qui est distinct du premier fluide et du troisième fluide permet de réduire les pertes de charge. En particulier, dans un exemple de réalisation, le premier fluide peut être une huile présentant par exemple un grade d'au moins 46, le deuxième fluide peut être de l'eau et le troisième fluide peut être de l'eau glycolée, par exemple du monopropylène glycol. Ce troisième fluide permet de résister à des températures très froides nécessaires lors d'essai en cyclage à très basse température. Le deuxième fluide intercalé dans la circuiterie entre le premier circuit et le troisième circuit, en ce que c'est le deuxième fluide qui assure la transmission de la pression initiale fournie par le premier circuit, permet de réduire la longueur du circuit en eau glycolée et donc les pertes de charge.

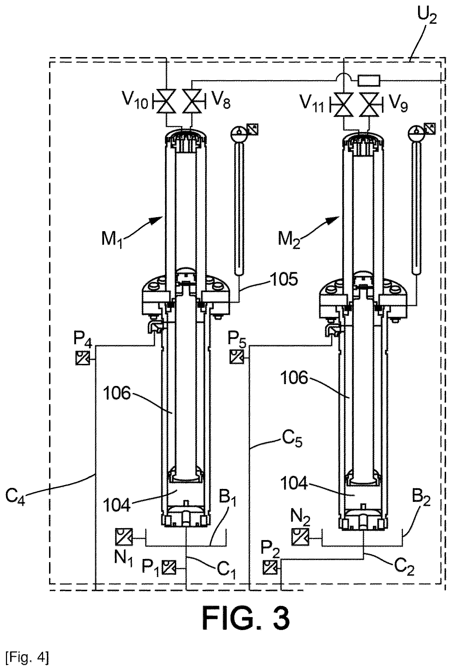

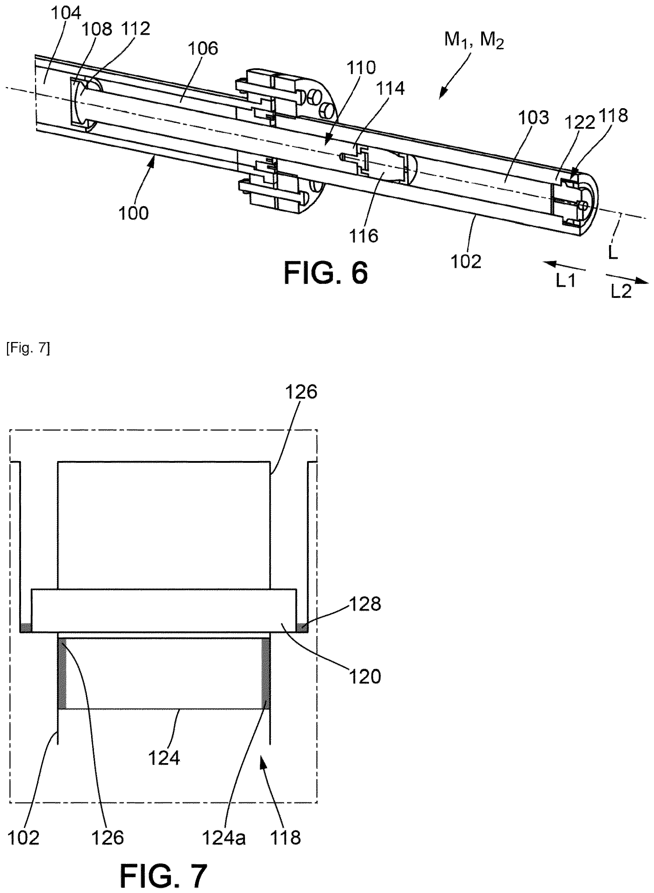

Plus précisément, l'installation comprend une pluralité d'unité :
- Une unité d'alimentation U1 hydraulique comportant une centrale hydraulique CH installée dans le premier circuit et plus particulièrement logée dans un local machinerie ;
- Une unité U2 à multiplication de pressurisation (figures 1 et 3) comprenant au moins un multiplicateur et dans le cas d'espèce au moins deux multiplicateurs M1, M2 et plus particulièrement exactement deux comme illustré aux figures, chaque multiplicateur M1, M2 comprenant, un corps cylindrique formé d'une première partie de corps cylindrique 100 basse pression et une seconde partie de cylindrique 102 haute pression, la première partie de corps cylindrique 100 logeant un piston 108 séparant une première chambre 104 formée dans une partie basse de la première partie de corps cylindrique 100 et une seconde chambre 106 formée dans une partie haute de la première partie de corps cylindrique 100 (figure 6). Les autres caractéristiques du multiplicateur M1, M2 sont décrites ultérieurement.
- Une unité U3 de gestion du second fluide,
- Une unité U4 de gestion du troisième fluide,
- Une unité U5 comprenant une enceinte à température pilotable sur une plage de température allant d'au moins -40°C jusqu'à +85°C et logeant intégralement le troisième circuit, cette enceinte permettant les tests aux températures extrêmes mais également les tests à température ambiante,
- Une unité U6 de génération et traitement de l'air pour le pilotage des vannes pilotées des unités U3 et U4 essentiellement,
- Une unité U7 prévue par exemple pour réaliser des essais en cyclage à température ambiante qui peuvent être réalisés à l'aide du second circuit, le troisième circuit n'étant pas nécesaire.

L'unité d'alimentation hydraulique permet d'apporter l'énergie nécessaire au remplissage des réservoirs d'hydrogène jusqu'à une pression maximale de 350 bars et permet de réaliser des cyclages de 0 à 350 bar. La centrale hydraulique CH comporte au moins un groupe moto-pompes, de préférence au moins deux, reliés à des cerveaux de distributeurs permettant la recirculation du premier fluide dans un réservoir d'au moins 1000 litres, de préférence au moins 1200 litres et qui est équipé de vannes, filtres de pression, filtres de pression retour.

Le premier circuit comprend un premier conduit équipé d'une première vanne pilotée V1 qui relie l'unité d'alimentation hydraulique, plus particulièrement un premier groupe moto-pompe, à la partie basse du premier multiplicateur M1. Le premier conduit peut comprendre un capteur de pression P1. Le premier circuit comprend un second conduit équipé d'une deuxième vanne pilotée V2 qui relie la partie basse du second multiplicateur M2 à l'unité d'alimentation hydraulique, plus particulièrement un second groupe moto-pompe. Le deuxième conduit C2 peut comprendre un capteur de pression P2. Le premier conduit et le second conduit sont reliés entre eux par un troisième conduit équipé d'une troisième vanne pilotée V3. Si la troisième vanne V3 est ouverte, les deux multiplicateurs M1 et M2 fonctionnent en simultané. La première vanne V1 et la deuxième vanne V2 ne peuvent être à l'état ouvert (autorisation de passage de fluide) en même temps que si la troisième vanne V3 est ouverte.

Un capteur maitre peut être agencé à proximité du réservoir et est utilisé pour commander la centrale hydraulique et réguler la pression dans le réservoir d'hydrogène selon les cycles définis par l'opérateur avec l'interface homme/machine.

Comme cela est visible sur la figure 1, l'unité hydraulique peut comprendre un quatrième conduit C4 comprenant une quatrième vanne V4 et cinquième conduit comprenant une cinquième vanne V5. Le quatrième conduit relie la seconde chambre du premier multiplicateur à la centrale hydraulique et le cinquième conduit relie la seconde chambre du second multiplicateur à la centrale hydraulique CH. Le quatrième conduit C4 peut comprendre un capteur de pression P4 et le cinquième conduit C5 peut comprendre un capteur de pression P5.

L'unité d'alimentation hydraulique fonctionne en circuit fermé au moyen des premier, second, troisième, quatrième et cinquième conduits décrit précédemment avec un circuit commun retour et une séparation pour le retour basse pression de chaque multiplicateur M1, M2 à l'aide des quatrième V4 et cinquième vannes V5. Un circuit 15 de fluide froid peut être prévu pour refroidir la centrale hydraulique CH en fonctionnement. Ce circuit de fluide froid peut avoir une température inférieure à 10°C, de préférence de l'ordre de 7°C. Le fluide de ce circuit de fluide froid peut être de l'eau. Des moyens d'échange thermique peuvent être agencés de manière à refroidir le premier fluide sortant de la centrale hydraulique et à destination des premières chambres 104 des multiplicateurs M1, M2. Ces moyens d'échange thermique peuvent comprendre au moins une portion du circuit de fluide froid et peuvent être agencée entre les la première vanne V1 et la deuxième vanne V2. De cette manière, le premier fluide arrive à une température maitrisée dans les premières chambres 104.

L'unité à multiplication de pression permet de transformer la pression en premier fluide fournie par la centrale hydraulique CH en une plus haute pression dans le deuxième circuit en seconde fluide.

Chaque multiplicateur comprend deux parties distinctes et étanches l'une par rapport à l'autre, à savoir une première partie de corps cylindrique recevant le premier fluide et une seconde partie de corps cylindrique recevant le second fluide.

Le volume de la partie basse pression peut être d'au moins 80 litres, par exemple 95 litres. Le diamètre intérieur de la première partie de corps cylindrique peut être d'environ 275 mm. Le volume de la seconde partie de corps cylindrique peut être d'au moins la 20 litres, par exemple de 23 litres. Le diamètre intérieur de la seconde partie de corps cylindrique peut être de 150 mm. Chaque multiplicateur peut avoir une haute de plusieurs mètres, par exemple de 4 mètres. L'utilisation de la course complète d'un multiplicateur permet de générer une pression en second fluide d'au moins 900 bar et par exemple jusqu'à 1050 bar lorsque le volume total du second corps cylindrique est utilisé. Le rapport des sections de la première partie de corps cylindrique permettant de réaliser des cycles de 0 à 350 bar et la seconde partie de corps cylindrique permettant de réaliser des cycles de 0 à 1050 bar, est de 3. Les multiplicateurs M1, M2 sont positionnés verticalement pour minimiser l'usure des joints d'étanchéité. La structure précise du multiplicateur sera décrite ultérieurement en référence aux figures 6 à 12. Ces multiplicateurs M1, M2 sont de préférence identiques et peuvent fonctionner en simultané. L'avantage principal du couplage de la centrale hydraulique avec au moins deux multiplicateurs est qu'il est possible grâce aux dimensions réduites de chaque multiplicateur et à l'amortissement coté multiplicateur de :
- de programmer des cycles précis de variation de pression (les courbes des pics minimum de pression et des pics maximum de pression sont réguliers et reproductibles),
- de faire varier la vitesse de montée et de descente en pression, c'est-à-dire le débit et d'avoir des vitesses de montée en pression ou de descente en pression constantes durant les cycles, et
- de d'utiliser des multiplicateurs M1, M2 présentant un volume utile dans la seconde partie de corps cylindrique 102 qui peut être deux fois inférieure à la variation de volume du réservoir testé. Ainsi, on minimise l'encombrement et on maintien la précision.

Chaque multiplicateur peut être associé à bac de rétention ou de récupération B1, B2 visant à récupérer d'éventuelles fuites du premier fluide et/ou du deuxième fluide. Chaque bac de rétention B1, B2 peut être associé à capteur de niveau N1, N2 par exemple optique permettant de détecter la présence de liquide dans le bac et par suite l'existence d'au moins une fuite. Chaque capteur peut être relié à l'interface homme/machine et/ou conduire à un arrêt automatique de l'installation de cyclage.

Un piquage fluidique 105 est réalisé dans la seconde chambre 106 de la première partie de corps cylindrique 100 et permet de mesurer de la position de la tige du multiplicateur M1, M2 par une mesure du niveau en premier fluide dans la conduite de piquage.

L'installation comprend un circuit de gavage permettant de remplir de manière automatique la seconde partie du corps cylindrique de chaque multiplicateur et de s'assurer que le second circuit est parfaitement relié fluidiquement à la seconde partie du corps cylindrique, sans aucune bulle d'air dans le second circuit.

Comme indiqué précédemment, l'installation de cyclage comprend une unité U3 de gestion du second fluide et qui est configurée pour permettre la gestion d'un fluide à haute pression. Cette unité U3 comprend un réservoir R3 de second fluide, qui peut être de l'eau. Cette unité U3 peut être alimentée en eau froide par une alimentation générale du bâtiment logeant l'installation. Cette unité U3 est reliée fluidiquement aux multiplicateurs M1, M2. Plus particulièrement, le réservoir R3 de second fluide est relié par une conduite C6 à une conduite C7 de liaison qui relie les multiplicateurs M1, M2 à l'unité U5 à enceinte à température pilotable.

L'unité U3 assure au moins l'une des fonctions suivantes :
- Alimentation en second fluide du second circuit,
- Gavage en second fluide du circuit haute pression,
- Protection contre la surpression,
- Mise en sécurité par purge de pression,
- Vidange du second circuit en second fluide,
- Gestion de la variation du volume du second fluide dans le second circuit, cette variation de volume étant liée aux variations de températures et est gérée par l'intermédiaire d'un accumulateur de 5L à 30 bar,
- la surpression de l'eau glacée pour la consommation des échangeurs thermiques

L'installation de cyclage comprend également une unité U4 de gestion du troisième fluide à l'intérieur du réservoir d'hydrogène à tester au sein de l'enceinte de l'unité U5 à enceinte à température pilotable. Cette unité U4 comprend un réservoir R4 de plusieurs centaines de litres prévu pour être rempli avec le troisième fluide, par exemple d'environ 400 litres.

L'unité U4 permet les fonctions suivantes :
- L'alimentation en troisième fluide du réservoir d'hydrogène à tester qui est logé dans l'enceinte à température pilotable de l'unité U5,
- Le gavage en troisième fluide du troisième circuit et du réservoir à tester ainsi que des séparateurs EP1, EP2 (décrits ultérieurement),
- Une protection contre la surpression,
- Mise en sécurité par purge de pression du troisième circuit,
- Vidange du troisième circuit,
- Gestion des variations de volume du fluide par un accumulateur 25L 30 bar.

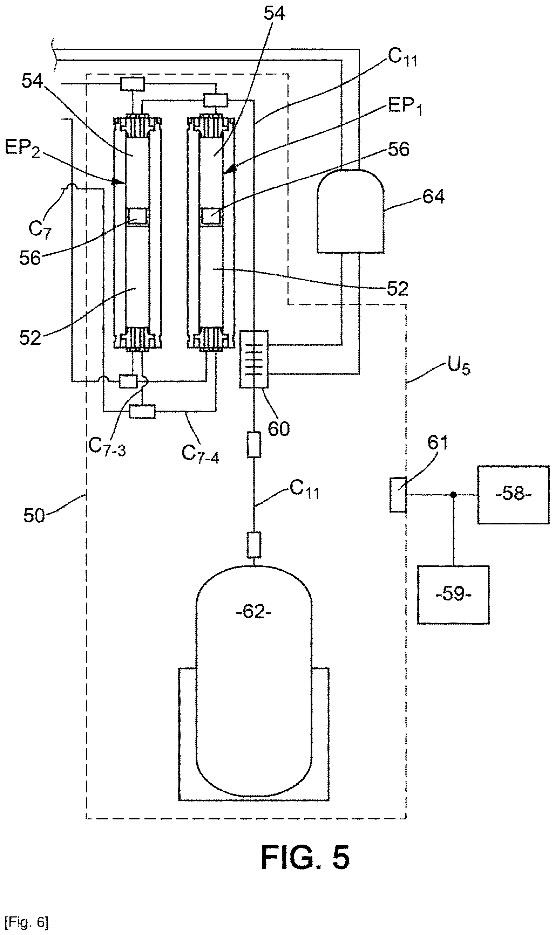

L'unité U5 est décrite ultérieurement en référence à la figure 5.

L'unité U6 de traitement de l'air du bâtiment logeant l'installation. Cette unité comprend un réseau d'air comprimé à quelques bars, environ 6 à 7 bars.

L'unité U7 de test d'un réservoir 11 à température ambiante est logé dans une enceinte dédiée et comprend un dispositif dérivation du réservoir comportant trois vannes V15, V16 et V17.

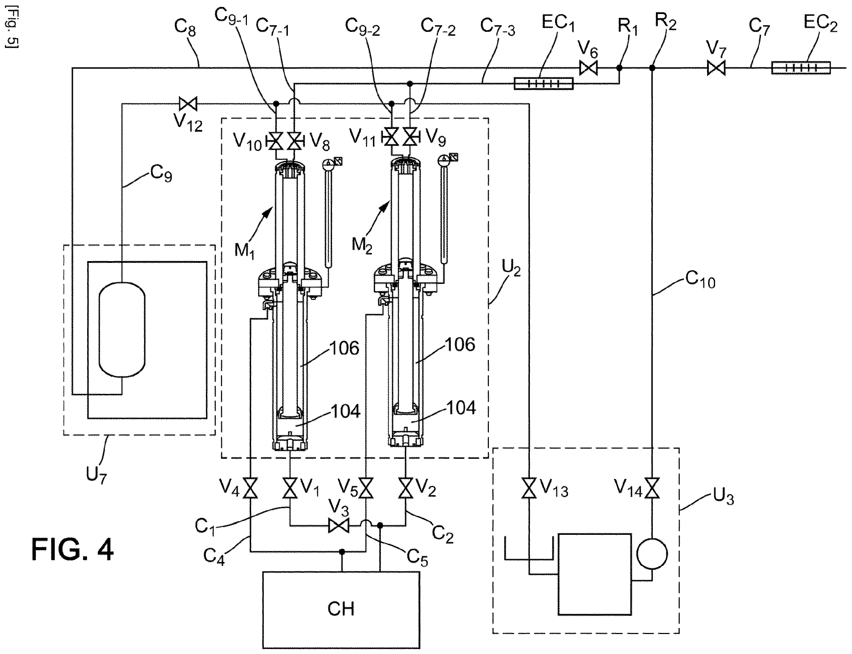

Comme illustré en figure 4, le second circuit comprend le conduit C7 de liaison des multiplicateurs au troisième circuit et plus précisément à des échangeurs de pression E1, E2. Le conduit C7 se divise en deux conduits C7-1 et C7-2 de liaison fluidique avec l'intérieur de la seconde partie de corps cylindrique des multiplicateurs M1, M2. Le conduit C7 comprend deux échangeurs de chaleur EC1, EC2. Les échangeurs EC1, EC2 peuvent être alimentés en fluide de refroidissement provenant du circuit 15 de fluide froid décrit précédemment. Le second circuit deux vannes V6 et V7, la vanne V7 étant agencée entre les deux échangeurs de chaleur EC1, EC2 agencé dans le conduit C7. La vanne V6 est agencé de manière à ce que ce premier point de raccordement R1 des conduits C7-1 et C7-2 au conduit C7 soit placé entre les vannes V6 et V7. L'échangeur de chaleur E1 peut être agencé entre ce point de raccordement et une portion de conduit C7-3 de raccordement des conduits C7-1, C7-2 au conduit C7. Un conduit C8 comprend la vanne V6 et relie une extrémité basse du réservoir XX au premier point de raccordement R1. Le conduit C7-1 comprend une huitième vanne V8 et le conduit C7-2 comprend une neuvième vanne V9.

Le circuit de gavage ou de remplissage en second fluide des multiplicateurs comprend un neuvième conduit C9 reliant l'extrémité haute du réservoir aux multiplicateurs M1, M2, plus précisément aux chambres haute pression 103, ce conduit s'étendant jusqu'au réservoir de second fluide de l'unité U3. Un dixième conduit C10 comprend une quatorzième vanne V14 relie le réservoir au conduit C7 et en un second point de raccordement R2 agencé entre le premier point de raccordement R1 et la vanne V7. Chaque multiplicateur M1, M2 est relié au neuvième conduit C9 par l'intermédiaire d'un conduit C9-1, C9-2 permettant la liaison fluidique avec l'intérieur de la seconde partie de corps cylindrique des multiplicateurs M1, M2. Le conduit C9-1 comprend une dixième vanne V10 et le conduit C9-2 comprend une onzième vanne V11. Le neuvième conduit C9 comprend une douzième vanne V12 agencée entre le réservoir et les conduits C9-1 et C9-2 et comprend une treizième vanne V13 agencée entre les conduits C9-1 et C9-2 et le réservoir de second fluide. Le dixième conduit C10 comprend une quatorzième vanne V14.

La dixième V10, la onzième vanne V11 et la douzième vanne V12 sont des vannes trois voies comprenant un évent d'air et sont agencées sensiblement sur un même point haut du second circuit. Les autres vannes sont des vannes deux voies.

Pour remplir les parties haute pression des multiplicateurs M1 et M2, on procède comme suit :
- Les première V1 et seconde V2 vannes sont ouvertes et une mise en pression de la première chambre 104 de chaque multiplicateur M1, M2 est réalisée ;
- Dans un second temps, la quatrième vanne V4 et la cinquième vanne V5 sont ouvertes lorsque le piston est en position haute de manière à permettre un écoulement du premier fluide dans un réservoir d'huile RH de l'unité U1 par l'intermédiaire du quatrième conduit C4 et du cinquième conduit C5.

- la septième vanne V7, la huitième vanne V8, la neuvième vanne V9, treizième vanne V13 étant en position fermée et la dixième vanne V10, la onzième vanne V11, la quatorzième vanne V14 et la quinzième vanne V15 ou vanne de dérivation étant en position ouverte, du second fluide stocké dans le réservoir de l'unité U3 est pompé dans le dixième conduit C10, de manière à faire circuler du second fluide au travers du dixième conduit C10, du huitième conduit C8, du réservoir de l'unité U7, du neuvième conduit C9, des conduits C9-1, C9-2. Lorsque du second fluide s'écoule à travers les évents des vannes V10, V11, et V12, la procédure de remplissage ou gavage de la seconde partie de corps cylindrique est terminée.

Cette procédure de gavage permet de remplir les parties haute pression des multiplicateurs M1, M2 tout en étant certain de ne pas avoir d'air dans les multiplicateurs.

On observe que la fermeture des vannes V8 et V9 permet d'isoler les conduits C7-1 et C7-2 lors du gavage ou d'opérations de maintenance ce qui explique qu'il ne soit pas nécessaire de les remplir à nouveau après une opération phase

On se réfère maintenant à la figure 5 qui représente l'unité U5 de cyclage à températures extrêmes. Comme on peut le voir sur la figure 5, le septième conduit C7 du deuxième circuit traverse l'enceinte 50 et s'étend à l'intérieur de celle-ci. Le conduit C7 se divise en deux conduits C7-3 et C7-4 chacun en communication fluidique avec une première chambre 52 d'un échangeur de pression EP1, EP2. Chaque échangeur de pression EP1, EP2 comprend une seconde chambre 54 opposée à la première chambre 50 par rapport à un piston 56 et comportant le troisième fluide. Les secondes chambres 54 sont reliées à un onzième conduit C11 destiné à être relié fluidiquement l'entrée d'un réservoir à tester.

L'installation de cyclage comprend des moyens 58 de refroidissement et de pilotage de la température dans l'enceinte 50 et de la température du troisième fluide afin d'éviter que le troisième fluide ne s'échauffe et ne conduise à des tests en cyclage non valide.

L'enceinte 50 est ainsi thermiquement isolée de l'extérieur par des moyens d'isolation agencé sur les faces interne et/ou externes de l'enceinte 50. L'unité U5 comprend des moyens de refroidissement 58 et/ou des moyens de chauffage 59 lesquels sont reliés à à des moyens de soufflage 61. De cette manière, il est possible de faire des essais à des températures extrêmes dans l'enceinte de l'unité U5, c'est-à-dire à basse température et à haute température.

Plus particulièrement, pour éviter l'échauffement de la portion du septième conduit C7 du second circuit qui s'étend à l'intérieur de l'enceinte, il est possible de prévoir des moyens d'isolation thermique de cette portion du conduit C7. Ces moyens peuvent comprendre des moyens de chauffage qui peuvent par exemple comprendre des câbles chauffants (non représentés).

Par ailleurs, à chaque cyclage, un échauffement se produit au niveau du col d'entrée du réservoir d'hydrogène consécutif de l'effet venturi créé au niveau du col par la baisse de la section de passage suivi d'une augmentation. Ainsi, à chaque cycle, une élévation de température de l'ordre de quelques degrés en fonction des paramètres de cyclage et de la dimension du col du réservoir testé. En pratique, un échauffement d'environ 7 degrés a déjà été constaté. Pour éviter cette augmentation de température, on ajoute un échangeur de chaleur 60 dans le troisième circuit et ainsi abaisser la température du troisième fluide. Cet échangeur 60 peut entourer une portion du troisième circuit destinée à être relié au réservoir 62 à tester. Afin d'avoir une source froide optimale, il est possible d'utiliser un cryostat 64 relié à l'échangeur de chaleur 60, l'échangeur de chaleur comprenant un serpentin entourant par exemple une partie du onzième conduit C11.

On se réfère maintenant aux figures 6 à 12 qui concerne un multiplicateur. Selon le présent document, en fonctionnement les multiplicateurs M1, M2 sont utilisés en position verticale ce qui permet d'éviter une usure asymétrique des pièces d'étanchéité.

Nous allons dans la description décrire un multiplicateur M1, M2. Les caractéristiques décrites s'appliquent à l'un et/ou l'autre des multiplicateurs.

Chaque multiplicateur M1, M2 comprend un axe longitudinal L et comprend un corps cylindrique comportant une première partie de corps cylindrique 100 destinée à recevoir le premier fluide basse pression et une seconde partie de corps cylindrique 102 destinée à recevoir le deuxième fluide haute pression. Ainsi, on observe que la section interne de la première partie de corps cylindrique 100 est supérieure à la section interne de la seconde partie de corps cylindrique 102. La première partie de corps cylindrique 100 comprend une première chambre basse 104 et une seconde chambre haute 106 séparées l'une de l'autre par piston 108 lequel est relié à une tige 110 de piston s'étendant à coulissement dans la seconde partie du corps cylindrique 102. La seconde partie de du corps cylindrique 102 comprend intérieurement une chambre 103 délimitée par une cartouche amovible 116 et un organe d'obturation 118 Le rapport entre les deux sections ainsi que la course de déplacement du piston déterminent le rapport de multiplication de pression entre la première partie du corps cylindrique 100 et la seconde partie du corps cylindrique 102.

La tige 110 de piston comprend une première extrémité 112 reliée au piston 108 et une seconde extrémité 114 portant la cartouche amovible 116 apte à coulisser à étanchéité dans la seconde partie de corps cylindrique 102, plus particulièrement sur la surface interne de la seconde partie de corps cylindrique 102 délimitant la chambre 103. On observe que l'extrémité de la seconde partie de corps cylindrique 102 comprend une extrémité ouverte qui peut être obturée par l'organe d'obturation 118 qui est amovible de manière à permettre un accès simple et rapide à la cartouche d'étanchéité et en assurer la maintenance comme cela apparaitra clairement dans ce qui suit.

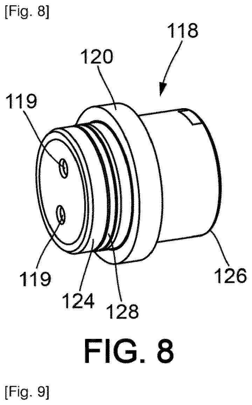

L'organe d'obturation illustré en figure 7 en section selon un plan de coupe transverse et en perspective en figure 8 comprend deux canaux 119 traversant s'étendant longitudinalement dont l'un est relié au conduit C7-1, C7-2 et C9-1, C9-2 (voir figure 4) pour, respectivement, la transmission 119 de la pression en fonctionnement et le gavage du multiplicateur M1, M2 comme évoqué précédemment.

L'organe d'obturation peut comprendre, comme représenté aux figures 7 et 8, un rebord annulaire 120 engagé en appui selon un premier sens L1 de l'axe longitudinal sur un épaulement annulaire 122 correspondant de la seconde partie du corps cylindrique 102.

L'organe d'obturation peut comprendre une première partie cylindrique 124 et une seconde partie cylindrique 126 séparées l'une de l'autre par le rebord annulaire 120 de l'organe d'obturation 118.

La première partie cylindrique 124 peut comprendre un filetage 124a externe permettant le vissage de celle-ci sur un filetage correspondant de la surface interne de la seconde partie de corps cylindrique 102. Afin de réaliser l'étanchéité entre l'épaulement 122 et le rebord annulaire 120 de l'organe d'obturation, un premier joint annulaire 126, de préférence torique, par exemple en téflon, peut être agencé entre le filetage 124a et le rebord annulaire 120 de l'organe d'obturation 118.

Un second joint annulaire 128 peut être serré entre le rebord annulaire 120 de l'organe d'obturation 118 et une surface cylindrique interne de la seconde partie du corps cylindrique 102, ce second joint annulaire 128 étant par exemple en thermoplastique.

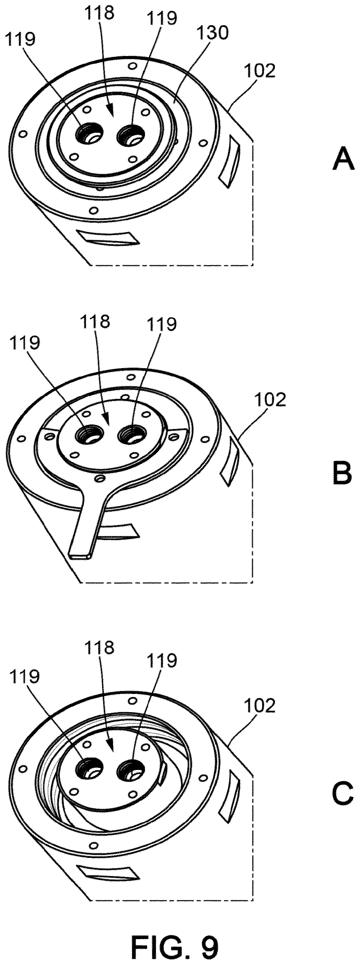

Lorsque l'organe d'obturation 118 est vissé en position serré sur l'épaulement 122 de la seconde partie de corps cylindrique 102, celui-ci peut être bloqué en position, c'est-à-dire en translation, selon un second sens L2 de la direction longitudinale L, par une culasse annulaire 130 vissée sur un filetage d'une surface interne de la seconde partie du corps cylindrique 102. La culasse est illustrée en figure 9A. La figure 9B illustre le démontage de la culasse grâce à des moyens de fixation d'un organe de serrage/desserrage de la culasse. Ces moyens de fixation sont ici des orifices permettant l'accouplement de l'organe ou outil avec la culasse pour en permettre le serrage ou le desserrage. La figure 9C illustre l'organe d'obturation en position serrée, la culasse étant démontée et n'étant donc pas représentée.

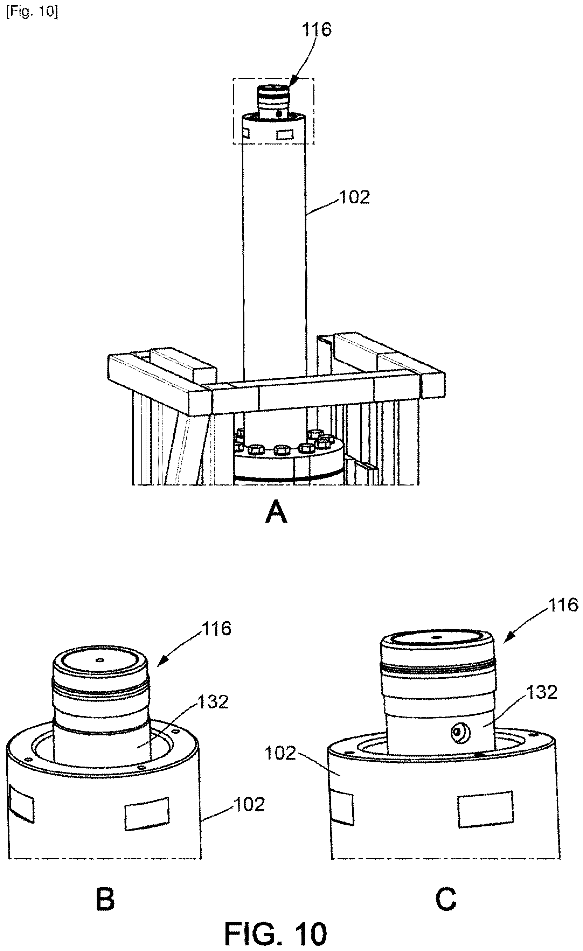

La figure 10 illustre la cartouche qui est position sortie relativement à la seconde partie de corps cylindrique 102. Cette position peut être obtenue en déplaçant le piston en position haute au moyen d'une pression appliquée dans la première chambre du multiplicateur M1, M2.

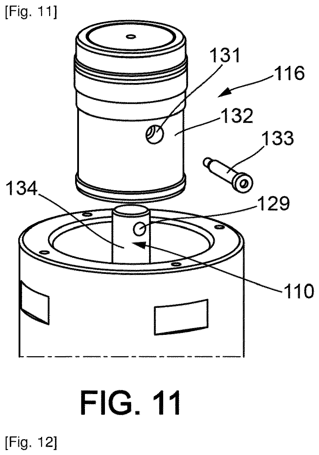

Comme illustré aux figures 10b et 10C, la cartouche peut comprendre des moyens de blocage sur l'extrémité libre de la tige de piston, ces moyens de blocage peuvent comprendre un dispositif à goupille. Un orifice 129 peut être formé à l'extrémité 114 de la tige 110 destiné à venir être placé en vis-à-vis d'un orifice 131 de la cartouche 116, une goupille 133 étant montée dans les orifices 129, 131. La cartouche 116 peut comporter une première partie cylindrique 132 reliée par un épaulement annulaire radial à une seconde partie cylindrique 134 dont l'extrémité opposée à la première partie cylindrique 132 comporte un filetage externe 136 (figure 11).

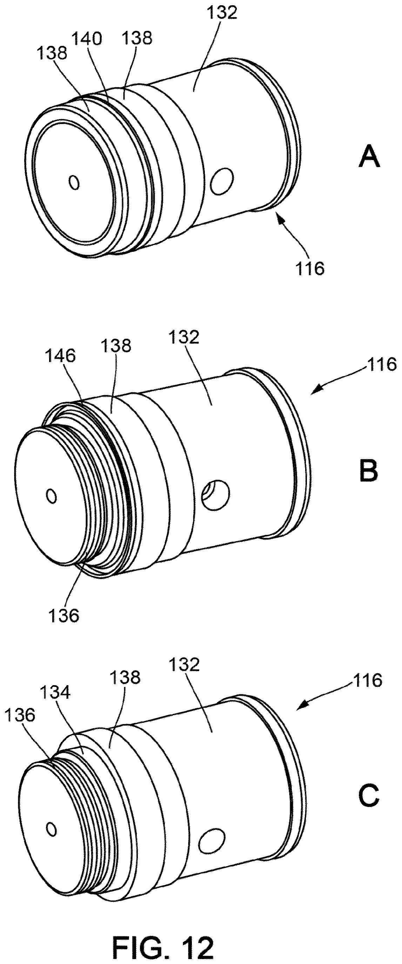

La seconde partie de corps cylindrique 134 peut recevoir deux bagues annulaires 138 entre lesquelles est intercalé un joint annulaire 140, par exemple à double lèvre. Une bague annulaire 138 est vissée sur le filetage externe 136 afin de bloquer l'ensemble des deux bagues et du joint sur la seconde partie cylindrique 134 de la cartouche 116. Les figures 12A, 12B et 12C illustrent le démontage successif de la bague annulaire 138 vissée sur la seconde partie cylindrique 134 (figure 12B) puis du joint annulaire 140 (figure 12C).

## Revendications

1. Installation (10) de test en cyclage d'un réservoir d'hydrogène comprenant :
- un premier circuit (10) basse pression de circulation d'un premier fluide ayant une première viscosité et dans lequel est agencé une centrale hydraulique (CH) de génération de pression,
- un deuxième circuit (12) haute pression de circulation d'un deuxième fluide ayant une seconde viscosité inférieure à la viscosité du premier fluide,
- un troisième circuit (14) haute pression de circulation d'un troisième fluide présentant un point de fusion inférieur à celui du premier fluide et de préférence d'au maximum -40°C,
- au moins un multiplicateur (M1, M2) agencé à la jonction du premier circuit (10) et du deuxième circuit (12).

2. Installation selon la revendication 1, dans lequel le premier circuit (10) et le deuxième circuit (12) sont agencés en tout ou partie dans une première enceinte à température ambiante.

3. Installation selon la revendication 1 ou 2, dans lequel le troisième circuit (14) est agencé dans une enceinte (50) comportant des moyens de refroidissement et de contrôle de la température jusqu'à une basse température d'au moins -40°C.

4. Installation selon l'une des revendications précédentes, dans lequel le premier fluide est une huile ayant au moins un grade 46.

5. Installation selon l'une des revendications précédentes, dans lequel le deuxième fluide est de l'eau à une température comprise entre 15 et 25, de préférence aux environ de 20°C.

6. Installation selon l'une des revendications précédentes, dans lequel le troisième fluide est de l'eau glycolée.

7. Installation selon l'une des revendications précédentes, dans lequel le troisième circuit (14) est logé dans une enceinte et dans lequel l'installation comprend des moyens de refroidissement et de pilotage de la température dans l'enceinte et de la température du troisième fluide.

8. Installation selon l'une des revendications précédentes, dans lequel ledit au moins un multiplicateur (M1, M2) est installé en position verticale.

9. Installation selon l'une des revendications précédentes, dans lequel il comprend au moins deux multiplicateurs (M1, M2).

10. Installation selon l'une des revendications précédentes, dans lequel ledit au moins un multiplicateur (M1, M2) comprend une première partie (100) de corps cylindrique agencée en partie basse et remplie du premier fluide et une seconde partie (102) de corps cylindrique agencée en partie haute et remplie du second fluide, la première partie (100) de corps cylindrique et la seconde partie de corps cylindrique étant séparées à étanchéité l'une de l'autre par une cartouche (116) amovible portée solidaire du piston (108).

11. Installation selon la revendication 10, dans lequel la seconde partie (102) de corps cylindrique comprend un obturateur (118) amovible obturant une extrémité libre de la seconde partie (102) du corps cylindrique, cet obturateur (118) comprenant deux canaux dont un premier canal (119) est relié un dispositif de gavage en deuxième fluide et dont un second canal (119) est relié au second circuit.

12. Installation selon l'une des revendications précédentes, dans lequel au moins un, de préférence au moins deux échangeurs (EC1, EC2) de chaleur est agencé en sortie dudit au moins un multiplicateur (M1, M2).
